# EUROPÄISCHE PATENTSCHRIFT

(11) **EP 3 350 781 B1**
(45) Veröffentlichungstag und Bekanntmachung des Hinweises auf die Patenterteilung: **23.03.2022**
(21) Anmeldenummer: 16790593.4
(22) Anmeldetag: 02.11.2016
(51) Int. Cl.: G07C 9/00

(54) **FAHRZEUGSCHLÜSSEL FÜR PASSIVE ZUGANGSSYSTEME UND ZUGEHÖRIGES VERFAHREN**
VEHICLE KEY FOR PASSIVE ACCESS SYSTEMS AND CORRESPONDING METHOD
CLÉ DE VÉHICULE POUR SYSTÈMES D'ACCÈS PASSIFS ET PROCÉDÉ ASSOCIÉ

(30) Priorität: 14.12.2015 DE 102015121736
(43) Veröffentlichungstag der Anmeldung: 25.07.2018
(73) Patentinhaber: Huf Hülsbeck & Fürst GmbH & Co. KG, 42551 Velbert (DE)
(72) Erfinder: ZILLER, Boris, 40885 Ratingen (DE); SKALETZ, Thomas, 40668 Meerbusch (DE)
(74) Vertreter: Zenz Patentanwälte Partnerschaft mbB
(86) Internationale Anmeldenummer: PCT/EP2016/076358
(87) Internationale Veröffentlichungsnummer: WO 2017/102163

(56) Entgegenhaltungen:
- US-A1- 2013 107 762
- US-B2- 7 602 274

## Beschreibung

Die Erfindung betrifft einen Funkschlüssel für ein Zugangssystem eines Fahrzeuges. Insbesondere betrifft die Erfindung einen Funkschlüssel (auch als ID-Geber bezeichnet) für sogenannte passive Zugangssysteme wie Keyless-Entry-Systeme.

Im Stand der Technik sind verschiedene Fahrzeugschlüssel für passive Zugangssysteme bekannt. Beispielsweise wird in dem Dokument US 7,602,274 B2 ein Fahrzeugschlüssel von der Gattung des erfinderischen Fahrzeugschlüssels beschrieben. Der Fahrzeugschlüssel weist eine Spulenanordnung auf, die als sogenannte 3D-Spulenanordnung für einen Signalempfang im niederfrequenten (LF) Frequenzbereich ausgebildet ist. Drei Antennenspulen sind in unterschiedlichen Raumrichtungen orientiert, um eine niederfrequente Signalübermittlung (z.B. bei 125 kHz) von Seiten des Fahrzeuges in jeder Lage des Fahrzeugschlüssels empfangen zu können.

Eine solche 3D-Spulenanordnung ist mit einer zugehörigen Empfangsschaltung gekoppelt. Der Schlüssel weist außerdem eine Steuerschaltung auf, die wiederum mit der Empfangsschaltung gekoppelt ist. Die niederfrequente Signalübermittlung vom Fahrzeug an den Fahrzeugschlüssel wird verwendet, um den Fahrzeugschlüssel, insbesondere dessen Steuerschaltung, aus einem Ruhezustand aufzuwecken und eine nachfolgende Kommunikation im Hochfrequenzbereich zu initiieren. Dazu weist der Fahrzeugschlüssel neben den LF-Antennen außerdem wenigstens eine für die Hochfrequenzkommunikation ausgebildete Hochfrequenzantenne und eine zugehörige Übermittlungsschaltung auf.

Da die Energieressourcen des mobilen Funkschlüssels geschont werden sollen, ist eine zu häufige Aktivierung des Funkschlüssels zu vermeiden. Daher wird die zentrale Steuerschaltung des Funkschlüssels, welche einen Mikrocontroller und zugeordnete Mittel zur Ausführung eines Programmcodes enthält, nur dann aufgeweckt, wenn die Empfangsschaltung ein passendes Signal über die 3D-Spulenanordnung im niederfrequenten Bereich empfängt.

Am Markt sind Produkte verfügbar, welche mehrere der genannten Komponenten zu Baugruppen zusammenfassen und mehr oder weniger integrieren. Beispielsweise sind Produkte des Unternehmens Texas Instrument bekannt, welche entsprechende Spulenanordnungen mit Empfangsschaltungen integrieren (TI Car access product family).

Die Schlüssel der genannten Art sind insbesondere für sogenannte pollende, also von Fahrzeugseite aus die Umgebung regelmäßig über LF-Signale abfragende Systeme vorgesehen.

Bei solchen Systemen mit mehreren LF-Empfangsspulen ist es üblich, bei Empfang eines niederfrequenten Signales über die 3D-Spulenanordnung eine der Spulen für einen nachfolgenden Signalempfang für die Dekodierung der niederfrequenten Signale auszuwählen. Diese Auswahl kann nach verschiedenen Kriterien erfolgen. Es hat sich jedoch gezeigt, dass ein solches Vorgehen einer Spulenauswahl Probleme hinsichtlich der Performance und Verlässlichkeit der Spulenauswahl mit sich bringt.

Aufgabe der Erfindung ist es, die Zuverlässigkeit des Betriebs eines Funkschlüssels mit einer 3D-Spulenanordnung zu verbessern.

Diese Aufgabe wird gelöst durch einen Funkschlüssel mit den Merkmalen des Patentanspruches 1 sowie ein Verfahren mit den Merkmalen des Patentanspruches 3.

Gemäß der Erfindung erfolgt über die Empfangsschaltung der 3D-Spulenanordnung nach Empfang eines Wake-Up Signals zunächst ein Wecken der zentralen Steuerschaltung. Der Vorgang des Empfangs eine Wake-up Signals (oder Wake-up patterns) ist bekannt und die im Markt verfügbaren Empfangsschaltungen erzeugen in Abhängigkeit von einem empfangenen Signal bei einer Trägerfrequenz zwischen 115kHz und 150kHz entsprechende Signale an nachgeordnete Schaltungen, wobei das Horchen auf ein Wake-up Signal durch die Empfangsschaltung nur einen sehr geringen Energiebedarf erfordert.

Nachdem die zentrale Steuerschaltung mit dem Mikrokontroller aus einem Ruhezustand aufgeweckt wurde, übernimmt diese Steuerschaltung mit dem Mikrokontroller die getrennte Abfrage jeder einzelnen der Spulen der 3D-Spulenanordnung. Dies bedeutet, selbst wenn gegebenenfalls vorher von der Empfangsschaltung bereits eine Auswahl einer der Empfangsspulen vorgenommen wurde, wird nach dem Wecken unter Kontrolle der zentralen Steuerschaltung des Schlüssels erneut eine Auswertung der Signale an jeder der Spulen der 3D-Spulenanordnung vorgenommen. Es hat sich gezeigt, dass aufgrund einerseits der zeitlichen Abläufe und andererseits der veränderten Systembedingungen im Fahrzeugschlüssel bei geweckter Steuerschaltung, eine deutlich verbesserte Verlässlichkeit des LF-Empfangs erreicht werden kann, wenn die zentrale Steuerschaltung die Signale jeder der Spulen nach dem Weckvorgang auswertet und daraufhin eine der Spulen für den LF-Empfang und die Decodierung der Signale auswählt.

Wesentliches Merkmal der Erfindung ist also nicht die Auswahl einer der Spulen, sondern der Zeitpunkt der Auswahl oder erneuten Auswahl einer der Spulen, wobei die Auswahl der Spulen durch die zentrale Steuerschaltung anhand eines Programmablaufs im Mikrocontroller und nicht durch eine gegebenenfalls mit den Spulen integrierte Empfangsschaltung realisiert wird. Die Spulenauswahl wird gemäß der Erfindung entsprechend nach Empfang des Wake-Up Pattern gestartet.

Die Auswahl der Spule kann von der Software erfindungsgemäß anhand der von der Spule empfangenen Signalstärke (RSSI-Wert) oder auch, nicht erfindungsgemäß, anhand der ermittelten Antwortzeiten der Spule vorgenommen werden.

Erfindungsgemäß wird diejenige Spule ausgewählt, die bei aufgewecktem Zustand der zentralen Steuerschaltung mit dem Mikroprozessor die größte Signalstärke der empfangenen LF-Signale zeigt.

Die ausgewählte Spule wird in den nachgeordneten Verfahrensschritten der zentralen Steuereinrichtung verwendet, um eingehende niederfrequente Signale zu empfangen und zu decodieren. In Abhängigkeit von den eingehenden Daten wird dann die hochfrequente Kommunikation mit dem Fahrzeug gestartet.

Bei Systemen gemäß dem Stand der Technik wurde zwar ebenfalls eine RSSI Erfassung im Verlauf der Sicherheitsüberprüfung durchgeführt, diese diente jedoch der Lokalisierung des Fahrzeugschlüssels gegenüber dem Fahrzeug. Bei der Erfindung wird die RSSI Messung vorgezogen um festzustellen, welche der LF-Spulen das höchste Feldstärkesignal aufweist. Erst dann werden die Daten der ausgewählten Spule dekodiert. Die RSSI Daten können später auch für die Lokalisation des Fahrzeugschlüssels herangezogen werden, was eine weitere RSSI Messung überflüssig macht.

Ein wesentlicher Vorteil des beschriebenen Systems und Verfahrens besteht darin, dass bestehende Systeme auf dieses Verfahren nachgerüstet werden können, da der

Spulenauswahlvorgang in der Software der zentralen Steuereinrichtung als Steuersoftware implementiert und auch geändert werden kann. Die softwarebasierte Spulenauswahl hat sich in der praktischen Erprobung einer vorgeschalteten Auswahl durch integrierte Bausteine der LF-Empfangsschaltung als deutlich überlegen gezeigt, da eine erheblich verbesserte Verlässlichkeit des Systems erreicht wurde.

Die Erfindung wird nun anhand der beiliegenden Zeichnung näher erläutert.
Figur 1 zeigt schematisch ein System, bestehend aus fahrzeugseitiger Kommunikationseinheit und mobilem Fahrzeugschlüssel;
Figur 2 zeigt ein Ablaufdiagramm eines Keyless-Entry-Verfahrens gemäß dem Stand der Technik;
Figur 3 zeigt den Ablauf eines Keyless-Entry-Verfahrens gemäß der Erfindung.

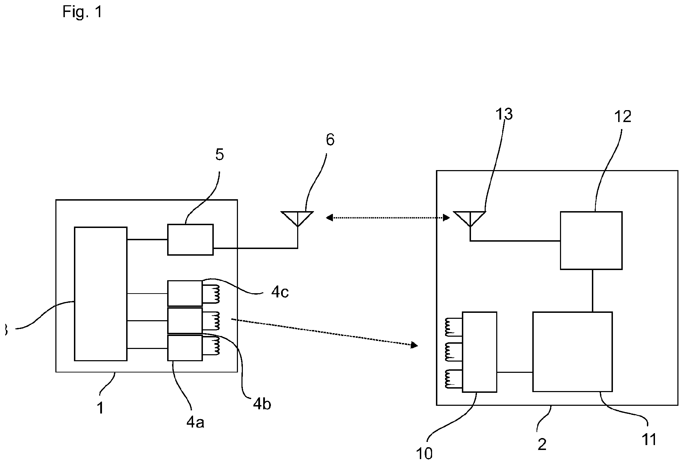

In Figur 1 ist in einer schematischen Ansicht eine fahrzeugseitige Kommunikationseinrichtung 1 gezeigt. Über eine drahtlose Kommunikationsverbindung wirkt ein Fahrzeugschlüssel 2 mit der Kommunikationseinheit 1 zusammen, um ein passives Zugangssystem zur Verfügung zu stellen. In der fahrzeugseitigen Kommunikationseinheit ist eine zentrale Steuereinrichtung 3 eingebaut. Mit der zentralen Steuereinrichtung 3 sind mehrere Sendespulen 4a, 4b, 4c für eine niederfrequente (LF) Kommunikation gekoppelt. Die niederfrequente Kommunikation findet in diesem Beispiel bei 125 kHz statt. Außerdem ist eine Kommunikationsschaltung 5 vorgesehen, die mit einer Hochfrequenzantenne 6 gekoppelt ist. Über die Kommunikationsschaltung 5 kann unter Ansteuerung der Antenne 6 eine Hochfrequenzkommunikation ausgeführt werden.

Auf der Seite des Fahrzeugschlüssels 2 ist ein LF-Kommunikationsbaustein 10 angeordnet, welcher eine Empfangsschaltung und mit der Empfangsschaltung gekoppelte Spulen für den Empfang niederfrequenter Signale aufweist. Die Spulen sind dabei als sogenannte 3D-Spulenanordnung ausgebildet. Die einzelnen Spulen weisen dabei in verschiedene Raumrichtungen, um einen verbesserten Empfang der niederfrequenten Signale bei beliebiger Lage des Fahrzeugschlüssels 2 zu ermöglichen.

Mit der Empfangsschaltung 10 ist eine Steuereinrichtung 11 gekoppelt, welche einen energiereduzierten Stand-by-Zustand einnehmen kann. Der Stand-by-Zustand ist ein energiereduzierter Zustand, in dem der Energiebedarf der Einrichtung des Fahrzeugschlüssels 2 herabgesetzt ist, da die Steuereinrichtung inaktiv geschaltet ist. Über die Empfangsschaltung 10 ist es beim Empfang eines passenden Wake-Up-Signals möglich, die Steuerschaltung 11 durch eine Ansteuerung aufzuwecken.

Die Steuereinrichtung 11 weist einen Mikrokontroller und Speichermittel für ausführbare Programmcodes auf. Mit der Steuereinrichtung 11 ist außerdem eine Kommunikationsschaltung 12 gekoppelt, die wiederum mit einer Sende-Empfangsantenne 13 für Hochfrequenzkommunikation verbunden ist.

Im Betrieb sendet die Kommunikationseinheit des Fahrzeugs in kurzen Zeitabständen (z.B. 250ms) Wake-Up-Signale über die Antennen 4a, 4b, 4c aus, um Fahrzeugschlüssel im näheren Umfeld des Fahrzeuges aufzuwecken. Ein solches System mit wiederholter Abfrage der Umgebung wird als sogenanntes pollendes System bezeichnet. Gerät der Schlüssel 2 in dem näheren Umgebungsbereich des Fahrzeuges, erreicht die Feldstärke der LF-Wake-Up-Signale aus, um von der Empfangseinrichtung 10 detektiert zu werden. In der Empfangseinrichtung 10 wird das Wake-Up-Signal empfangen und in Abhängigkeit von dem Wake-Up-Signal wird die Steuereinrichtung 11 geweckt, also in einem betriebsfähigen Zustand versetzt.

Grundsätzlich ist es möglich, dass die Empfangsschaltung 10 anhand des empfangenen Wake-Up-Signals und der Signale der 3D-Spulenanordnung bereits eine Vorauswahl einer der Empfangsspulen der Empfangsschaltung 10 vornimmt. Gemäß der Erfindung ist es jedoch vorgesehen, dass nach Aufwecken der Steuereinrichtung 11 durch diese Steuereinrichtung 11 eine Ansteuerung jeder der Spulen der 3D-Spulenanordnung vorgenommen wird. In Abhängigkeit von den Signalantworten, insbesondere einer RSSI-Wertermittlung, wählt die Steuerschaltung 11 eine der Spulen der Empfangsschaltung 10 aus, über welche die niederfrequenten Signale empfangen werden. Nachfolgend wird eine Decodierung der Signale ausgeführt und in Abhängigkeit von den decodierten Signalen wird eine hochfrequente Kommunikation über die Kommunikationsschaltung 12 und die Antenne 13 mit den korrespondierenden Komponenten auf Fahrzeugseite, der Antenne 6 und der Kommunikationsschaltung 5, initiiert.

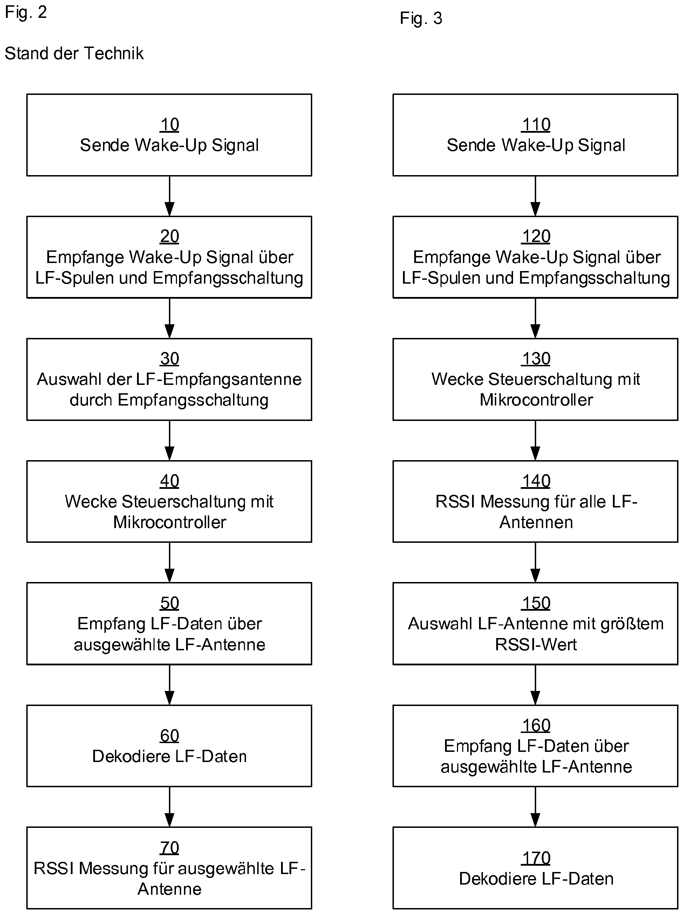

Figur 2 zeigt zur Verdeutlichung der Unterschiede des erfindungsgemäßen Verfahrens ein Verfahren zur Antennenauswahl gemäß dem Stand der Technik.

Gemäß dem Stand der Technik wird bei Schritt 10 vom Fahrzeug ein Wake-Up-Signal im niederfrequenten Signalbereich ausgesandt. Ein Fahrzeugschlüssel empfängt über eine 3D-Spulenanordnung das Wake-Up-Signal. Die Empfangsschaltung, die mit den Spulen für eine niederfrequente Kommunikation gekoppelt ist, trifft eine Auswahl der zu verwendenden LF-Empfangsantenne anhand der Signalstärke der einzelnen Antennen oder deren Antwortzeiten. Anschließend wird die Steuerschaltung mit dem Mikrocontroller im Fahrzeugschlüssel geweckt. Über diese vorausgewählte Antenne werden die niederfrequenten Daten empfangen und es erfolgt eine Decodierung der Daten.

Im weiteren Verlauf der Authentifizierung des Fahrzeugschlüssels kann später eine RSSI-Bestimmung für die empfangene Signalstärke erfolgen. Diese wird dann wiederum anhand der durch die Empfangsschaltung vorausgewählten Antennenspule vorgenommen. Eine solche RSSI-Bestimmung dient dazu, die Lage des Fahrzeugschlüssels im Fahrzeug oder um das Fahrzeug herum genauer zu bestimmen, beispielsweise um die Berechtigung zur Ausführung einer Funktion zu validieren.

Figur 3 zeigt einen entsprechenden Zusammenhang gemäß der Erfindung. Gemäß der Erfindung wird die Reihenfolge der Verfahrensschritte geändert und die Mittel zur Ausführung der jeweiligen Verfahrensschritte werden abgewandelt.

In Schritt 110 wird von Fahrzeugseite ebenfalls ein Wake-Up-Signal ausgesandt, was in Schritt 120 über die LF-Spulenanordnung und die zugehörige Empfangsschaltung empfangen wird.

Anschließend wird die Steuerschaltung mit dem Mikrokontroller geweckt, wie Schritt 130 zeigt. Der Mikrokontroller in der Steuerschaltung führt bei Schritt 140 unter Programmsteuerung eine RSSI-Abfrage für jede der Niederfrequenzantennen der 3D-Spulenanordnung durch. Anhand der ermittelten Werte wird diejenige Spule mit dem höchsten RSSI-Wert ausgewählt. Die Auswahl der Spule, welche für den niederfrequenten Datenempfang und damit zum Empfang der zu decodierenden Daten ausgewählt wird, erfolgt also nicht in der Empfangsschaltung, sondern in der Steuerschaltung mit dem Mikroprozessor, und zwar nach dem Weck-Vorgang. Wesentlich ist also, dass gemäß der Erfindung zunächst ein Wecken des Mikrokontrollers in der Steuerschaltung erfolgt, erst danach wird eine Spule der 3D-Spulenanordnung für den Datenempfang und die Decodierung ausgewählt. Die Spulenauswahl erfolgt dabei durch einen Steuerteil des Schlüssels, welcher sich bei dem ersten LF-Empfangsvorgang im Stand-by Zustand befindet und erst nach einem Weckvorgang zur Verfügung steht.

Anschließend erfolgt der Datenempfang der niederfrequenten Signale über die ausgewählte Antenne, wie bei Schritt 160 gezeigt, und bei Schritt 170 werden die entsprechenden empfangenen Daten decodiert.

Im weiteren Verlauf können die ermittelten RSSI-Daten zur weiteren Auswertung der Lage des Fahrzeugschlüssels gegenüber dem Fahrzeug herangezogen werden. Es ist nicht nötig, eine weitere Bestimmung der RSSI-Daten vorzunehmen, da bereits auf die Messung des Mikrokontrollers im geweckten Zustand zurückgegriffen werden kann. Gleichwohl kann grundsätzlich auch noch eine weitere RSSI-Abfrage im späteren Verlauf der Authentifizierung erfolgen.

## Patentansprüche

1. Funkschlüssel (2) für ein Zugangssystem eines Kraftfahrzeuges, mit einer Empfangsschaltung (10) mit wenigstens drei LF-Empfangsspulen für einen niederfrequenten Signalempfang, wobei die LF-Empfangsspulen in verschiedene Raumrichtungen orientiert sind,
einer mit der Empfangsschaltung (10) gekoppelten zentralen Steuerschaltung (11) mit einem Mikrocontroller, wobei die Steuerschaltung mit dem Mikrocontroller verschiedene Betriebszustände einnehmen kann, von denen wenigstens ein Betriebszustand ein energiereduzierter Ruhezustand ist und ein Betriebszustand ein aktiver Betriebszustand ist, wobei die Empfangsschaltung (10) dazu ausgebildet ist, die Steuerschaltung (11) aus dem energiereduzierten Ruhezustand zu wecken, wenn über die LF-Empfangsspulen ein Signal empfangen wird,
**dadurch gekennzeichnet, dass**
die zentrale Steuerschaltung (11) mit dem Mikrocontroller ausgebildet ist, um nach dem Wecken aus dem Ruhezustand jede der LF-Empfangsspulen separat anzusteuern und eine empfangene Signalstärke abzufragen, wobei die Steuerschaltung in Abhängigkeit von den Signalstärken diejenige LF-Empfangsspule mit der höchsten Signalstärke für einen nachfolgenden Signalempfang auswählt.

2. Funkschlüssel nach Anspruch 1, wobei die Empfangsschaltung mit der LF-Spulenanordnung als integrierter Baustein ausgebildet ist und wobei die Steuerschaltung getrennt von dem integrierten Baustein ausgebildet ist.

3. Verfahren zum Betreiben eines Funkschlüssels für ein Zugangssystem eines Kraftfahrzeuges, mit einer Anordnung aus wenigstens drei LF-Empfangsspulen für einen niederfrequenten Signalempfang, wobei die LF-Empfangsspulen in verschiedenen Raumrichtungen orientiert sind, aufweisend die Schritte:
Erfassen von empfangenen Signalen an den LF-Empfangsspulen mit Hilfe einer Empfangsschaltung,
wenn an einer der LF-Empfangsspulen ein Signal empfangen wird, Wecken einer mit der Empfangsschaltung gekoppelten zentralen Steuerschaltung in Abhängigkeit von dem empfangenen LF-Signal, wobei beim Wecken ein Mikrocontroller der Steuerschaltung aus einem energiereduzierten Ruhezustand in einen aktiven Betriebszustand gebracht wird,
Ansteuern jeder der LF-Empfangsspulen und Abfragen einer empfangenen Signalstärke mit Hilfe des Mikrocontrollers,
Auswählen der LF-Empfangsspule mit der höchsten Signalstärke für einen nachfolgenden Signalempfang, wobei die Auswahl der Spulen durch die zentrale Steuerschaltung anhand eines Programmablaufs im Mikrocontroller erfolgt.

## Claims

1. Radio key (2) for an access system of a motor vehicle, having a receiving circuit (10) with at least three LF receiving coils for low-frequency signal reception, the LF receiving coils being oriented in different spatial directions,
a central control circuit (11) coupled to the receiving circuit (10) and having a microcontroller, wherein the control circuit with the microcontroller can enter into different operating states, of which at least one operating state is an energy-reduced idle stade and one operating state is an active operating state, wherein the receiving circuit (10) is designed to wake the control circuit (11) from the energy-reduced quiescent state when a signal is received via the LF receiving coils,
**characterised in that**
the central control circuit (11) with the microcontroller is configured to separately drive each of the LF receiver coils after waking from the idle state and to query a received signal strength, wherein the control circuit selects, in dependence on the signal strengths, that very one of the LF receiver coils with the highest signal strength for a subsequent signal reception.

2. Radio key according to claim 1, wherein the receiving circuit with the LF coil arrangement is embodied as an integrated component, and wherein the control circuit is embodied separately from said integrated component.

3. Method for operating a radio key for an access system of a motor vehicle, having an arrangement of at least three LF receiving coils for low-frequency signal reception, said LF receiving coils being oriented in different spatial directions, comprising the steps:
Detecting received signals at the LF receiver coils by means of a receiver circuit,
when a signal is received at one of the LF receiving coils, waking a central control circuit coupled to the receiving circuit in response to the received LF signal, wherein upon waking a microcontroller of the control circuit is brought from an energy-reduced idle state to an active operating state,
Driving each of the LF receive coils and querying a received signal strength using the microcontroller,
Selecting that one of the LF receiving coils with the highest signal strength for a subsequent signal reception, whereby the selection of the coils is carried out by the central control circuit using a program sequence in the microcontroller.

## Revendications

1. Clé radio (2) pour un système d'accès d'un véhicule automobile, comprenant un circuit de réception (10) avec au moins trois bobines de réception LF pour une réception de signal à basse fréquence, les bobines de réception LF étant orientées dans différentes directions spatiales,
un circuit de commande central (11) couplé au circuit de réception (10) avec un microcontrôleur, le circuit de commande avec le microcontrôleur pouvant prendre différents états de fonctionnement, dont au moins un état de fonctionnement est un état de repos à énergie réduite et un état de fonctionnement est un état de fonctionnement actif, le circuit de réception (10) étant conçu pour réveiller le circuit de commande (11) de l'état de repos à énergie réduite lorsqu'un signal est reçu par les bobines de réception LF,
**caractérisé en ce que**
le circuit de commande central (11) avec le microcontrôleur est conçu pour commander séparément, après le réveil à partir de l'état de repos, chacune des bobines de réception LF et pour interroger une intensité de signal reçue, le circuit de commande sélectionnant, en fonction des intensités de signal, la bobine de réception LF ayant l'intensité de signal la plus élevée pour une réception de signal suivante.

2. Clé radio selon la revendication 1, dans laquelle le circuit de réception avec l'agencement de bobines LF est réalisé sous forme de composant intégré et dans laquelle le circuit de commande est réalisé séparément du composant intégré.

3. Procédé de fonctionnement d'une clé radio pour un système d'accès d'un véhicule automobile, comprenant un agencement d'au moins trois bobines de réception LF pour une réception de signal à basse fréquence, les bobines de réception LF étant orientées dans différentes directions spatiales, comprenant les étapes consistant à :
Détection des signaux reçus sur les bobines de réception LF à l'aide d'un circuit de réception,
lorsqu'un signal est reçu au niveau de l'une des bobines de réception LF, le réveil d'un circuit de commande central couplé au circuit de réception en fonction du signal LF reçu, dans lequel, lors du réveil, un microcontrôleur du circuit de commande est amené d'un état de repos à énergie réduite à un état de fonctionnement actif,
commande de chacune des bobines de réception LF et interrogation d'une intensité de signal reçue à l'aide du microcontrôleur,
sélection de la bobine de réception LF ayant l'intensité de signal la plus élevée pour une réception de signal ultérieure, la sélection des bobines étant effectuée par le circuit de commande central à l'aide d'un déroulement de programme dans le microcontrôleur.
